Europäisches Patentamt

European Patent Office

Office européen des brevets

(11) Publication number: **0 373 858**
A2

# EUROPEAN PATENT APPLICATION

(21) Application number: 89312907.2

(22) Date of filing: 11.12.89

(51) Int. Cl.5: **B62K 19/22**

(30) Priority: 14.12.88 GB 8829107

(43) Date of publication of application:
20.06.90 Bulletin 90/25

(84) Designated Contracting States:
BE DE FR GB LU NL

(71) Applicant: **RALEIGH INDUSTRIES LIMITED**
**Triumph Road**
**Nottingham, NG7 2DD(GB)**

(72) Inventor: **O'Donovan, Gerald Victor**
**316 Carlton Road**
**Worksop Nottinghamshire, S81 7LP(GB)**
Inventor: **Thomas, Eric Robert**
**252 Melton Road**
**Edwalton Nottingham, NG12 4AG(GB)**

(74) Representative: **Funge, Harry et al**
**WILSON, GUNN & ELLIS 41-51 Royal**
**Exchange Cross Street**
**Manchester M2 7BD(GB)**

(54) Mounting of tubular elements.

(57) A method for use in joining together tubular elements (12, 23) in the production of cycle frames or cycle forks is disclosed wherein an essentially blind annular space (26) is provided to receive a tube end (27) into engagement therewith. Adhesive is applied to the space and, on curing of the adhesive, a secure bond is obtained between the inner and outer surfaces of the tube and the structure defining the annular space.

FIG.1

# MOUNTING OF TUBULAR ELEMENTS

The invention concerns the mounting of tubular elements, and has more particular reference to a method of and means for joining together tubular elements in the manufacture of a cycle frame or in fabricating a part thereof or a component part therefor.

It is known in the art of bicycle frame manufacture to join together tubular elements by providing lugs or spigots on one of two adjacent elements to receive a tube end into engagement therewith, the lug or spigot and tube end being secured together as by brazing or welding.

It has also been proposed to use tapered or stepped spigots for engagement with a tube end and to effect secure attachment by means of an appropriate adhesive.

A problem which has been experienced in relation to the use of adhesives in this context concerns the retention of requisite amounts of adhesive between the opposing surfaces of the elements to be joined, progressive engagement of the tube end with the spigot being likely to displace adhesive from at least part of the surface thereof and thus prejudice the security of the bond.

In an attempt to avoid this particular problem use of a stepped spigot has been proposed, the outer end of the spigot being of reduced cross-sectional dimensions and the surface of such outer end being grooved to receive adhesive, the ribs of adhesive present in the grooves forming radially inwardly directed extensions to the annular body of adhesive existing between the reduced dimension end of the spigot and the tube end lying outwardly thereof. In such proposal, the tube end is intended to be a press-fit on that part of the stepped spigot having the larger dimension, and thus the security of the connection is derived from the mechanical engagement of the tube end with the inner end of the spigot and also from the adhesive bonding between the outer end of the spigot and the tube end.

It is an object of the present invention to provide a method of and a means for connecting tubular elements of a cycle frame utilising adhesives to provide a secure joint well able to sustain the loads and forces to which the same will be subjected in use.

It is a further object of the invention to provide a method for fabricating a component part, such as, for example, a front fork, for application to or to be embodied in a cycle frame.

According to one aspect of the present invention a method of mounting a tubular element in the manufacture of a cycle or like frame or in the fabrication of a component part thereof or therefor is proposed which includes the step of forming an essentially blind annular space extending outwardly from a body to receive the end of the tubular element into engagement therewith, the space being clearance on the said end, providing adhesive material in the space and/or on the said end, engaging the end with the said space, and effecting curing of the said adhesive.

The said body may comprise a tubular element to which the aforesaid tubular element is to be joined.

According to another aspect of the invention, a member for application to or to be embodied in a cycle or like frame is characterised by a tubular formation extending outwardly therefrom and a body of lesser transverse dimension inwardly of the said formation and arranged in coaxial overlapping relationship therewith, the formation and body collectively defining an essentially blind annular space to receive the end of another member of tubular form into engagement therewith.

In one arrangement, wherein the said member is a frame member, the body comprises a flanged element of tubular form engageable coaxially with the tubular formation, the flange extending radially outwardly of the body and being fixedly secured relative to the tubular formation at a position remote from the free end thereof.

According to a further preferred feature, the tubular formation is effectively flanged at that end thereof adjacent the frame member and the radial flange to the body seats thereagainst.

According to a still further preferred feature, the tubular formation comprises a sleeve slidably engageable with the frame member, the sleeve having an integral tubular lug extending outwardly therefrom, the sleeve being cut away opposite the lug to define a skirt from which the said lug extends, and the skirt being apertured to receive the flanged body into coaxial relationship with the lug.

The invention will now be described further, by way of example only, with reference to the accompanying drawings illustrating one embodiment thereof and in which : -

Fig. 1 is a side elevation of a cycle frame head-tube embodying the present invention;

Fig. 2 is an exploded perspective view of a coupling lug and insert member of application to a head tube in producing the arrangement shown in Fig. 1;

Fig. 3 is a section on line III-III of Fig. 1;

Fig. 4 is a longitudinal section through an alternative embodiment of the invention;

Fig. 5 is an exploded perspective view of a crown fork assembly for a bicycle;

Fig. 6 is a diagrammatic front elevation, partly broken away, of the crown fork assembly of Fig. 5; and

Fig. 7 is a section on line VII - VII of Fig. 6.

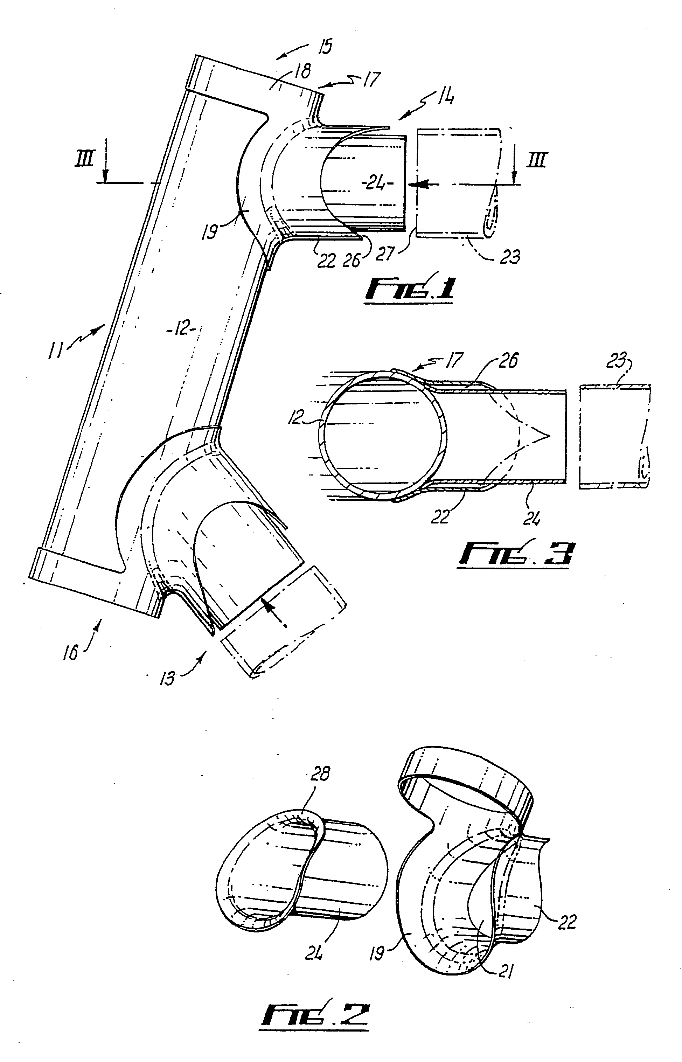

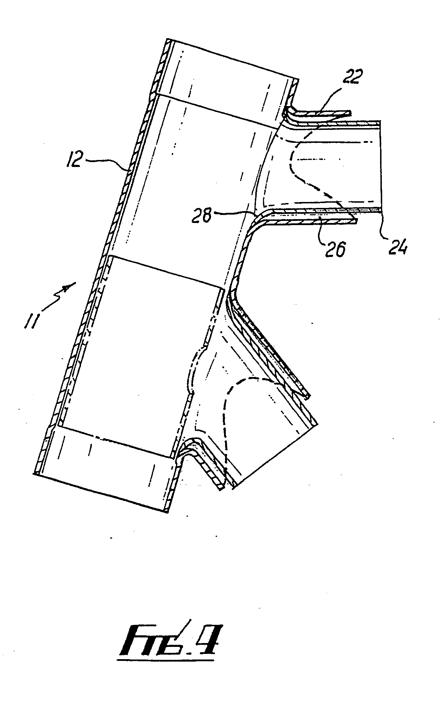

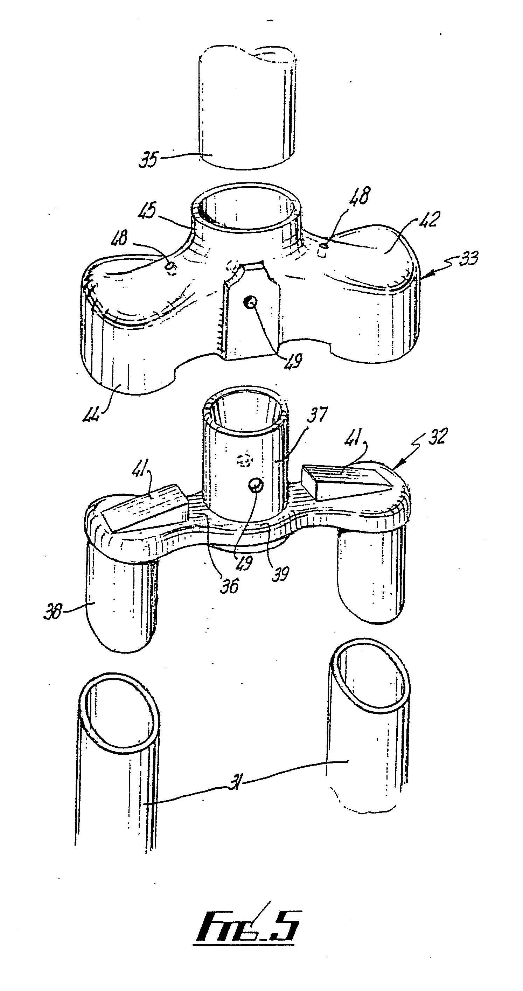

Referring now to the drawings, and in particular to Figs. 1 to 3 thereof, a head-tube arrangement 11 for use in the construction of a bicycle or like frame comprises a head tube element 12 having lug assembl 13, 14 provided at the respective opposed ends 15, 16 thereof.

The lug assemblies 13, 14 at the respective ends are of similar form, and one only thereof will accordingly be described in detail.

Thus, lug assembly 14 comprises a cylindrical sleeve member 17 engageable with the head-tube 12 in coaxial relationship therewith and as a close fit thereon, the wall of the said member 17 being cut away at one side thereof to leave a band 18 extending about the said element 12 adjacent the end thereof and a depending skirt 19, the said skirt 19 having an aperture 21 therein in register with an outwardly extending tubular lug 22 about the periphery of the aperture and formed integrally with the sleeve member.

The axis of the tubular lug 22 is inclined relative to the axis of the head-tube element 12 according to the intended angular relationship between the head-tube 12 and cross-bar 23 of the eventual frame, and the inner surface of the assembly 14 is stepped and radiussed about the aperture 21 for a purpose hereafter to be made apparent.

At its outer end the lug 22 is profiled to provide a requisite aesthetic effect in the intended end product.

The lug assembly 14 further includes a tubular stub insert 24 arranged coaxially with lug 22, the said insert 24 being a clearance fit within lug 22 and being dimensioned to provide annular space 26 therebetween to receive the end 27 of cross-bar 23 into close-fitting relationship therewith.

One end of the insert 24 is formed with an outwardly directed flange 28 profiled intimately to engage the stepped inner surface of the skirt 19 about the periphery of the aperture 21 therein.

The length of insert 24 will ordinarily be not less than the corresponding dimension of the lug 22 and the insert 24 may well protrude outwardly from such lug.

In use the stub insert 24 is secured in position in the sleeve member 17, as by welding, brazing or bonding and the lug assembly 14 is positioned on the head tube element 12 and secured thereto in like manner, the flange 28 of the insert being in intimate relationship both with the adjacent surface of the head-tube and with the stepped region of the sleeve member, thereby to enhance the security of the insert relative to the head tube.

The arrangement as hereinproposed lends itself to the use of adhesives in the assembly of a cycle frame, in that adhesive applied to the annular space defined by and between the lug and insert will serve to procure adhesion at both inner and outer surfaces of the tube end engaged therewith. The closed nature of the inner end of the annular space will preclude the possibility of the adhesive being swept from such space on tube engagement, and will accordingly assist in ensuring satisfactory adhesion.

Any excess adhesive as might be forced from the space on tube end engagement can be removed prior to subsequent processing. Engagement of the tube end internally of the lug will avoid unsightly lines of join inherent in arrangements wherein the tube end is placed on a spigot and secured thereto by an adhesive or otherwise.

Furthermore, the nature of the formation proposed lends itself to the production of a strong and effective join readily capable of maintaining its integrity in normal usage.

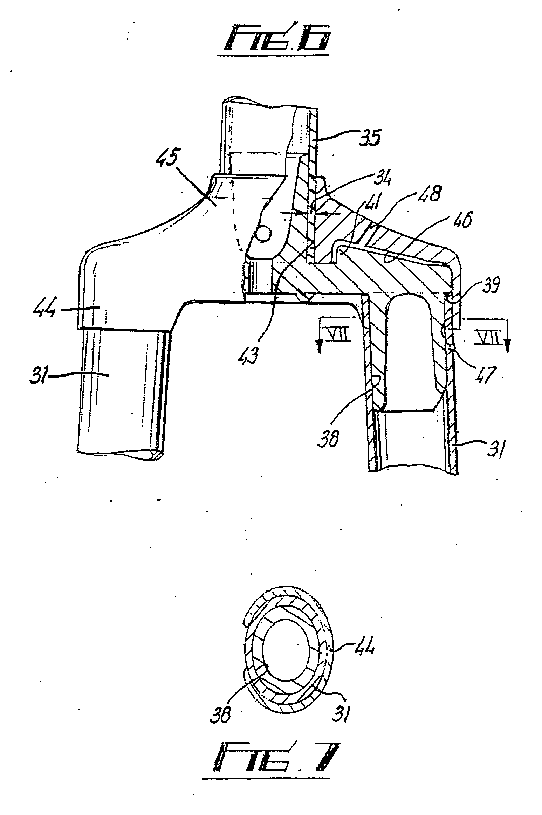

In an alternative embodiment of the invention, the lug is formed integrally with the head tube, as by cold-forming, and the tubular stub insert is engaged with the lug through an aperture existing in the wall of the head-tube and in register with the lug, the insert having a flanged end, in like manner to the arrangement shown in Figs. 1 to 3, which is profiled ultimately to engage the surface of the head-tube about the aperture therein and being secured in position as by welding, brazing or bonding. The alternative arrangement is shown in Fig. 4, in which like numerals are used for the same or corresponding parts.

It is to be appreciated that the invention is not limited to the precise detail of the embodiments herein disclosed, since alternatives will readily present themselves to one skilled in the art.

Thus, for example, it maybe found desirable to include a liner tube, as shown in dotted line in Fig. 4, to provide support/location for the stub insert, such liner tube being bonded or otherwise secured in position during the normal securing step.

The invention is of application not only in relation to the connecting of tubular elements of a cycle frame to the head-tube thereof, and may also be used in connecting other adjacent tubes of such a frame, or in other aspects of cycle frame or cycle manufacture.

For example, in the context of the bottom bracket of a bicycle frame, an internally screw-threaded steel tube may be provided coaxially with the bore to such bottom bracket, such tube fulfilling the dual role of providing added security of location for any stub inserts provided thereat and intended to receive a seat tube, down tube or chain stays in accordance with the method of the invention, and of providing screw-threads to receive the ball cups of such bottom brackets, the latter feature being of value in the context of aluminium frames wherein the screw threads provided at the bottom bracket are susceptible to wear and damage.

The tube will provide a fixed location for the stub inserts for press assembly of the frame and a reservoir to receive the bonding agent.

The invention is of particular application to the context of fork crowns, for cycles.

Thus, referring now to Figs 5 to 7 of the drawings, a fork crown adapted to receive fork blade tubes 31 into engagement therewith comprises a crown base 32 and a crown case 33 arranged in nesting disposition and adapted and arranged to define therebetween an upwardly extending, essentially blind annular space 34 to receive and support a fork steerer tube 35.

Crown base 32 comprises a base plate 36 of elongate form, an upstanding spigot 37 centrally thereof and depending spigots 38 symmetrically arranged in relation to the axis of the upstanding spigot and at the respective ends of the base plate. The respective axes of the depending spigots 38 are downwardly divergent at an inclined angle of, 6°, to provide a like divergence in the fork blade tubes applied thereto.

The plate is shaped, when considered in plan, to conform to the respective peripheries of the spigots and to provide a step 39 at the outwardly facing aspects thereof.

The upper surface of the crown plate 32 further includes inwardly facing wedges 41, for a purpose hereafter to be made apparent.

Crown case 33 comprises a cover plate 42 of similar plan view to base plate 36 and includes a central aperture 43 which is clearance on upstanding spigot 37, there being a depending skirt 44 about the periphery of the cover plate 42 and an upstanding collar 45 about aperture 43. At its underside the cover plate includes wedge-shaped recesses 46 complementary to and for cooperation with wedges 41 provided on the upper surface of crown plate 32.

On nesting engagement of crown case 33 with crown base 32, the clearance of aperture 43 (and also of the upstanding collar 45) on spigot 37 defines essentially blind annular space 34 to receive the fork steerer tube into closely fitting but free engagement therewith.

The recesses 46 receive wedges 41, again in closely fitting but free engagement therewith, whilst the skirt 44 defines respective part annular spaces 47 about each of the depending spigots 38.

The steps 39 provided at the outwardly facing aspects of the plate in the region of the spigots is such as to ensure effective closure of the annular space 34 and part annular spaces 47 at the respective inner ends thereof, the dimension of the spaces 34, 47 in the radial direction thereof being such as freely to receive the steerer tube or fork blade with sufficient space to accommodate adhesive.

The internal dimensions of the crown case 33 relative to the dimensions of the opposing surfaces of the crown base 32 are so selected as to provide a close nesting fit therebetween, again with sufficient space to accommodate adhesive, to the intent that the cover plate 42 and the base plate 36 might be secured together in laminated relationship and thereby take advantage of the structural benefits of lamination. The co-operating wedges and recesses 41, 46 are so positioned and are of such form as will advantageously transmit and sustain the loadings to which the fork crown is subjected in use of the cycle to which the crown is applied, particularly in view of the cushioning effect of the elastomeric adhesive between the opposing surfaces, the case 33 and base 32 being of laminated form in this area too, thus further enhancing the benefit of the configuration adopted.

In assembly of the fork crown, mating surfaces of the crown base 32 and crown case 33 are provided with a coating of an appropriate elastomer filled adhesive, and the two parts are brought into nesting relation. If desired, through holes, for example as shown at 48, are provided in the upper surface of the crown case, to allow for the injection of additional adhesive under pressure, thereby to pressurise the bond lines before curing.

The end of steerer tube 35 is coated with adhesive, both internally and externally thereof, as too are the inner surfaces of the blind annular bore 34, and the tube end is engaged with the bore 34. If desired, the upstanding spigot 37 may be provided with fine longitudinal ribs, not shown, to ensure concentricity between the steerer tube 35 and spigot 37. Apertures, such as apertures 49, may be provided in spigot 37 and in collar 45 to allow of the introduction of further adhesive or the release of excess adhesive expressed from the annular space.

The fork tube blades 31 are similarly coated with an adhesive, as too are the walls of the annular spaces 47 defined by and between the depending spigots 38 and the skirt, and the blades 31 are engaged each with a respective space 47.

Subsequent to assembly the adhesive is cured.

If desired a steel fork crown bearing seating may be applied to the collar 45 of the crown cover, such seating fulfilling the further function of sealing the upper end of annular space 34.

Whilst the crown case and crown base may be of cast form, an aluminium casting alloy including crack stoppers being thought particularly suitable, other procedures well known in the art, such as, for example, hot forging or pressing may be preferred.

Indeed, subject to the material meeting the stringent requirements of the component, the fork crown may be moulded from, say, a filled synthetic plastics material.

## Claims

1. A method of mounting a tubular element in the manufacture of a cycle or like frame or in the fabrication of a component part thereof or therefor including the step of forming an essentially blind annular space (26, 34) extending outwardly from a body (12, 32) to receive the end of the tubular element (23, 35) into engagement therewith, the space being clearance on the said end, providing adhesive material in the space and/or on the said end, engaging the end with the said space, and effecting curing of the said adhesive.

2. A member for application to or to be embodied in a cycle or like frame, characterised by a tubular formation 22, 33) extending outwardly therefrom and a body (24, 37) of lesser transverse dimension inwardly of the said formation and arranged in coaxial overlapping relationship therewith, the formation and body collectively defining an essentially blind annular space (26, 34) to receive the end of another member 23, 35) of tubular form into engagement therewith.

3. A member as claimed in claim 2 comprising a tubular frame member (12), the body (24) being a flanged element of tubular form engageable coaxially with the tubular formation (22), the flange (28) extending radially outwardly of the body and being fixedly secured relative to the tubular formation at a position remote from the free end thereof.

4. A member as claimed in claim 3, wherein the tubular formation (22) is effectively flanged at that end thereof adjacent the frame member (12) and the radial flange (28) to the body (24) seats thereagainst.

5. A member as claimed in claim 3 or 4, wherein the tubular formation (22) includes a sleeve (17) slidably engageable with the frame member (12), and comprises a tubular lug integral with and extending outwardly from said sleeve, the sleeve (17) being cut away opposite the lug to define a skirt (19) from which the said lug extends, and the skirt being apertured to receive the flanged body 24) into coaxial relationship with the lug.

6. A member as claimed in claim 2, comprising a fork crown case 33), the body (37) being an upstanding spigot extending outwardly from a crown base (32) adapted and arranged for nesting engagement with the crown case (33).

7. A member as claimed in claim 6, wherein the crown case (33) includes a collar (45), defining the tubular formation aforesaid existing in overlapping coaxial relationship with the said spigot (37) on nesting engagement of the crown base (32) with the crown case (33).

8. A member as claimed in claim 6 or 7, wherein the crown base (32) includes depending spigots (38) symmetrically arranged with respect to the upstanding spigot (37) and the crown case (33) includes a depending skirt (41) adapted and arranged to define, in conjunction with the said depending spigots (38), a respective part annular space (47) between the skirt and adjacent spigot.

9. A member as claimed in any one of claims 6 to 8, wherein the crown base (32) and crown case (33) have mating faces extending transverse to the axis of the upstanding spigot, the crown case (33) and crown base (32) being adhesively secured together at said mating faces, thus to form a lamination threat.

10. A member as claimed in claim 9, wherein the mating faces include wedge-shaped lugs (41) on the crown base (32) and complementary recesses (46) internally of the crown case (33).

11: A member as claimed in claim 9, or in claim 10 or 11 when dependent upon claim 9, further including a fork blade (31) engaged with each respective depending spigot (38) and adhesively secured to said spigot (38) and to the opposing surface of the depending skirt (44), and a steerer tube (35) engaged with the said essentially blind annular space (34) and adhesively secured to the outer surface of the body (37) and to the inner surface of the tubular formation (45).

FIG.1

FIG.3

FIG.2

FIG. 4

35

45 48 42
48 33

49

44

37
41 32
41

38 49 39
36

31

FIG.5

FIG.6

45
35
34
48
46
41
44
31
39
43
VII
VII
47
38
31

FIG.7

44
38
31